# EUROPEAN PATENT APPLICATION

(11) **EP 4 712 638 A1**
(43) Date of publication of application: **18.03.2026**
(21) Application number: 23936157.9
(22) Date of filing: 11.05.2023
(51) Int. Cl.: H04W 72/12

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2023/093683
(87) International publication number: WO 2024/229842

(57) **Abstract**

Embodiments of the present disclosure provide an information processing method and apparatus, a communication device, and a storage medium. The information processing method, performed by a terminal, may comprise: sending indication information to a network device, wherein the indication information indicates a buffer status report (BSR) table used by BSRs of the terminal.

## Description

### FIELD

The present disclosure relates to, but is not limited to, the field of wireless communication technologies, and more particularly to an information processing method, an information processing apparatus, a communication device and a storage medium.

### BACKGROUND

In order to facilitate a network device to schedule resources for a terminal, the amount of data to be sent in an uplink may be reported to the network device by triggering the terminal to report a buffer status report (BSR). The BSR is reported according to a BSR table. For example, the BSR table includes an index and a buffer size (BS) value or a BS value range corresponding to the index, and the BSR may indicate a current BS value of the terminal by carrying the index.

With the continuous development of wireless cellular communication technologies, especially the development of the 5th generation (5G) technology, it has gradually become feasible to use cellular communication technologies to support big data services (such as extended reality (XR) services), and the amount of uplink data transmitted by the terminal is also increasing.

### SUMMARY

Embodiments of the present disclosure provide a method, an apparatus, a communication device and a storage medium.

Embodiments of a first aspect of the present disclosure provide an information processing method, which is performed by a terminal, and includes: sending indication information to a network device, where the indication information indicates a buffer status report (BSR) table used by a BSR of the terminal.

Embodiments of a second aspect of the present disclosure provide an information processing method, which is performed by a network device, and includes: receiving indication information sent by a terminal, where the indication information indicates a buffer status report (BSR) table used by a BSR of the terminal.

Embodiments of a third aspect of the present disclosure provide an information processing apparatus, which includes: a sending module configured to send indication information to a network device, where the indication information indicates a buffer status report (BSR) table used by a BSR of a terminal.

Embodiments of a third aspect of the present disclosure provide an information processing apparatus, which includes: a receiving module configured to receive indication information sent by a terminal, where the indication information indicates a buffer status report (BSR) table used by a BSR of the terminal.

Embodiments of a fourth aspect of the present disclosure provide a communication device, including a processor, a transceiver, a memory and an executable program stored in the memory and configured to be executed by the processor, where the processor is configured to perform the information processing method provided in the first aspect or the second aspect when executing the executable program.

Embodiments of a fifth aspect of the present disclosure provide a computer storage medium, for storing an executable program, which, when executed by a processor, is configured to cause the processor to perform the information processing method provided in the first aspect or the second aspect.

Embodiments of a sixth aspect of the present disclosure provide a communication system, including: a terminal configured to perform the information processing method provided by any technical scheme of the first aspect; and a network device configured to perform the information processing method provided by any technical scheme of the second aspect.

According to the technical schemes provided by the embodiments of the present disclosure, the terminal may send the indication information to an access network device. By sending the indication information, the network device may be helped to accurately analyze the BS value carried by the received BSR. If the network device may accurately know the BS value of the terminal, it may accurately schedule resources for reporting the data to be cached at the terminal side, thus reducing the waste of resources and the transmission delay caused by insufficient scheduling.

It should be understood that the above general description and the following detailed description are only illustrative and explanatory, and should not limit the embodiments of the present disclosure.

### BRIEF DESCRIPTION OF THE DRAWINGS

The accompanying drawings, which are incorporated in and constitute a part of the specification, illustrate embodiments consistent with the present disclosure, and together with the description, serve to explain the principles of the embodiments of the present disclosure.
Fig. 1 is a schematic diagram of a wireless communication system according to an illustrative embodiment.
Fig. 2 is a flowchart of an information processing method according to an illustrative embodiment.
Fig. 3 is a flowchart of an information processing method according to an illustrative embodiment.
Fig. 4 is a flowchart of an information processing method according to an illustrative embodiment.
Fig. 5 is a flowchart of an information processing method according to an illustrative embodiment.
Fig. 6 is a flowchart of an information processing method according to an illustrative embodiment.
Fig. 7 is a schematic diagram of a BSR according to an illustrative embodiment.
Fig. 8 is a schematic diagram of a media access control (MAC) sub-protocol data unit (PDU) according to an illustrative embodiment.
Fig. 9 is a schematic diagram of a MAC sub-PDU according to an illustrative embodiment.
Fig. 10 is a schematic diagram of an information processing apparatus according to an illustrative embodiment.
Fig. 11 is a schematic diagram of an information processing apparatus according to an illustrative embodiment.
Fig. 12 is a schematic diagram of a UE according to an illustrative embodiment.
Fig. 13 is a schematic diagram of a communication device according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the embodiments of the present disclosure. Rather, they are merely examples of apparatuses and methods consistent with some aspects of the embodiments of the present disclosure.

The terms used in the embodiments of the present disclosure are for the purpose of describing specific embodiments only, and are not intended to limit the embodiments of the present disclosure. The singular forms "a", "an" and "the" used in the present disclosure are also intended to include the plural forms, unless the context clearly indicates other meaning. It should also be understood that the term "and/or" as used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first message may also be called the second information, and similarly, the second information may also be called the first message. Depending on the context, the word "if" as used herein may be interpreted as "when" or "while" or "in response to determining".

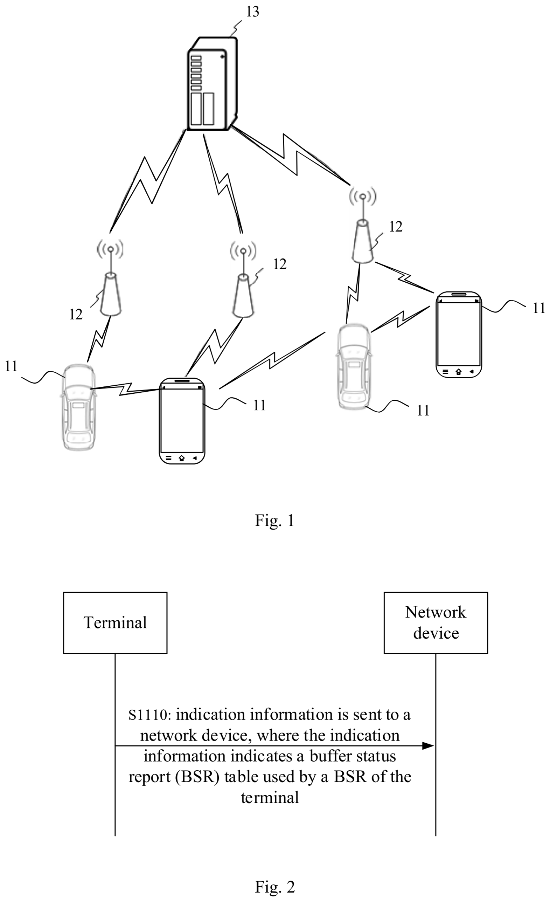

Fig. 1 shows a schematic diagram of a wireless communication system provided by an embodiment of the present disclosure. As shown in Fig. 1, the wireless communication system is a communication system based on cellular mobile communication technologies, and may include a plurality of UE 11 and a plurality of access network devices 12.

The UE 11 may be a device that provides voice and/or data connectivity to a user. The UE 11 may communicate with one or more core networks via a radio access network (RAN). The UE 11 may be an Internet of Things UE, such as a sensor device, a mobile phone (or a "cellular" phone) and a computer with an Internet of Things UE. For example, it may be a fixed, portable, pocket-sized, handheld, computer-built or vehicle-mounted device, such as a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be a vehicle-mounted device, for example, a driving computer with a wireless communication function, or a wireless communication device externally connected to a driving computer. Alternatively, the UE 11 may also be a roadside device, such as a street lamp, a signal lamp or other roadside devices with a wireless communication function.

The access network device 12 may be a network-side device in the wireless communication system. The wireless communication system may be the 4th generation mobile communication (4G) system, also known as a long term evolution (LTE) system. Alternatively, the wireless communication system may also be a 5G system, also known as a new radio (NR) system or a 5G NR system. Alternatively, the wireless communication system may also be a next generation system of the 5G system or a MTC system. The access network in the 5G system may be called a new generation-radio access network (NG-RAN).

The access network device 12 may be an evolved access network device (eNB) adopted in the 4G system. Alternatively, the access network device 12 may also be an access network device (gNB) adopting a central-distributed architecture in the 5G system. When the access network device 12 adopts the central-distributed architecture, it usually includes a central unit (CU) and at least two distributed units (DUs). A protocol stack of a packet data convergence protocol (PDCP) layer, a radio link control (RLC) layer and a media access control (MAC) layer is arranged in the central unit; and a physical (PHY) layer protocol stack is arranged in the distributed unit. The embodiments of the present disclosure do not limit the specific implementation of the access network device 12.

A wireless connection may be established between the access network device 12 and the UE 11 through a radio air interface. In different embodiments, the radio air interface is a radio air interface based on the 4th generation (4G) mobile communication network technology standard; alternatively, the radio air interface is a radio air interface based on the 5th generation (5G) mobile communication network technology standard, for example, the radio air interface is the new radio air interface; alternatively, the radio air interface may also be a radio air interface based on the technology standard of the next generation mobile communication network of the 5G.

As shown in Fig. 2, an information processing method is provided by an embodiment of the present disclosure. The information processing method is performed by a terminal, and includes the following steps.

In step S1110, indication information is sent to a network device, where the indication information indicates a buffer status report (BSR) table used by a BSR of the terminal.

The terminal may include various types of communication devices. The terminal may be a mobile terminal or a fixed terminal.

The terminal may be a mobile phone, a tablet computer, smart office equipment, smart home equipment, vehicle-mounted equipment and/or flying equipment.

For example, the terminal may send the indication information to an access network device. By sending the indication information, the network device may be helped to accurately analyze the BS value carried by the received BSR. In a case that the network device may accurately know the BS value of the terminal, it may accurately schedule resources for reporting the data to be cached at the terminal side, thus reducing the waste of resources and the transmission delay caused by insufficient scheduling.

In the embodiment of the present disclosure, the indication information may be used for the network device to determine which BSR table is specifically used by the terminal to generate the BSR, and/or the indication information may be used for the network device to determine the type of the BSR table used by the terminal to generate the BSR.

In some embodiments, the indication information may include table information of the BSR table, and the table information may include, but is not limited to, at least one of:
a table number, a table name or a table index;
a type of the BSR table; and
an indicator bit of the BSR table, etc.

In conclusion, the above indication information may be any information indicating the BSR table used by the BSR generated or sent by the terminal.

In some embodiments, the indication information may be any information implicitly indicating the BSR table or explicitly indicating the BSR table.

When making implicit indication, the indication information may also be multiplexed to indicate other contents, which may reduce the bit overhead.

In some embodiments, the terminal obtains a plurality of BSR tables in advance according to the protocol agreement or the configuration information of the network device, and before sending the BSR, the BSR table for generating the BSR is selected according to a trigger condition defined by trigger information stored this time, a currently cached data amount, a terminal type and the like.

For example, the BSR table includes a type 1 BSR table and a type 2 BSR table. Each type of BSR table may include one or more BSR tables. In this case, the trigger condition defined by the trigger information stored by the terminal itself may include, but is not limited to, at least one of trigger conditions for sending the BSR according to the type 1 BSR table and/or the type 2 BSR table, so that when the trigger condition is met, the BSR is sent according to the type 1 BSR table or the type 2 BSR table.

In an embodiment, the trigger condition includes a first condition for instructing the trigger terminal to send the BSR according to the type 2 BSR table. When the trigger condition is triggered, the terminal uses the type 2 BSR table to send the BSR, and/or, when the first condition is not triggered, the terminal uses the type 1 BSR table to send the BSR. In this case, the indication information may also implicitly inform the network device that the terminal uses the type 1 BSR table or the type 2 BSR table to send the BSR by indicating whether the trigger condition is triggered.

In an embodiment, the trigger information corresponding to the first condition may include threshold information for triggering the use of the type 2 BSR table. The threshold information includes: first threshold information, which indicates a threshold of the minimum cached data amount for sending the BSR using the type 2 BSR table; and/or, second threshold information, which indicates a quantization error threshold for sending the BSR using the type 2 BSR table.

Considering that a range of the maximum cached data amount corresponding to the type 1 BSR table and a range of the maximum cached data amount corresponding to the type 2 BSR table may be different, therefore, by setting a second information field of a first message to carry the first threshold information, the terminal may be informed to send the BSR according to the type 2 BSR table when the amount of data to be transmitted is greater than or equal to the threshold of the minimum cached data amount indicated by the first threshold information, and to send the BSR according to the type 1 BSR table when the amount of data to be transmitted is less than the threshold of the minimum cached data amount indicated by the first threshold information.

It should be noted that the quantization error is used to describe a difference between the amount of resources reserved for the terminal by the network device based on the BSR sent by the terminal and the amount of resources required for the actual transmission of the terminal. It may be understood that the quantization error may be determined according to a difference between the range of the cached data amount corresponding to the BS value and the actual amount of data to be transmitted by the terminal. The larger the quantization error, the more likely it is to waste resources due to excessive resource allocation and/or transmission delay due to insufficient resource allocation.

In an embodiment, the trigger condition may further include a second condition, and the second condition is used for the terminal to determine which specific BSR table in the type 1 BSR table and the type 2 BSR table may be used to send the BSR. In this case, the configuration information corresponding to the second condition may include one or more condition entries, and different condition entries may be used to indicate usage conditions of different BSR tables.

For example, the type 2 BSR table may include a plurality of type 2 BSR tables in different formats, and the plurality of type 2 BSR tables in different formats may be adapted to data transmission services with different types and/or different data amounts. The type 2 BSR table in a target format may be any one of the plurality of type 2 BSR tables in different formats.

In conclusion, there are many ways for the terminal to decide which BSR table to use, and the specific implementation is not limited to any of the above ones. When the terminal decides which BSR table to use by itself, it will inform the network device by sending the indication information.

In some embodiments, the indication information may further include effective information, and the effective information indicates a time period, times and/or a position of the terminal and/or the trigger condition of the BSR table pointed by table information used by the terminal to send the BSR.

In some embodiments, the effective information may also indicate a BSR type associated with the BSR table indicated by the used table information. There are many BSR types, and the effective information may indicate which type of BSR the type 1 BSR table and/or the type 2 BSR table are used for.

In a case that the indication information contains not only the table information but also the effective information, the network device may determine the effective time and/or effective space according to the effective information, and determine the BSR table indicated by the table information in the indication information used by the BSR received in the effective time and/or effective space.

In some embodiments, the indication information may further include granularity information. For example, a granularity indicated by the granularity information may include a logic channel group (LCG) granularity, a quality of service (QoS) flow granularity or a data radio bearer (DRB) granularity.

In a case that the granularity is the LCG granularity, different LCGs may use different BSR tables or the same BSR table to send the BSR.

In a case that the granularity is the QoS flow granularity, one or more LCs or LCGs of a certain QoS flow mapping all use the same BSR table to send the BSR.

In a case that the granularity is the DRB granularity, one or more LCs or LCGs of a certain DRB flow mapping all use the same BSR table to send the BSR.

For example, a DRB is mapped to a QoS flow, and then the QoS flow is mapped to an LC or LCG.

Of course, the above is only an example of the indication information, and the specific implementation is not limited to this example.

In the embodiment of the present disclosure, the indication information may be carried in various uplink messages to be sent to the network device. For example, the indication information may be carried in a radio resource control (RRC) message, a media access control (MAC) control element (CE), or uplink control information (DCI).

In some embodiments, the indication information may be carried in user equipment assistance information (UAI) to be sent to the network device.

In some embodiments, the indication information and the BSR may be sent to the network device, respectively. For example, the terminal may send the indication information to the network device before sending the BSR, so that after the network device receives the BSR, it may determine the BSR table used by the currently received BSR according to the indication information received in advance. In some embodiments, the indication information and the BSR may be sent to the network device together, so that the network device may receive the indication information while receiving the BSR, and then decode the BSR according to the indication information, so as to accurately know the BS value currently to be sent by the terminal.

In some embodiments, the indication information is carried in a MAC sub-PDU. The MAC sub-PDU may be a MAC CE.

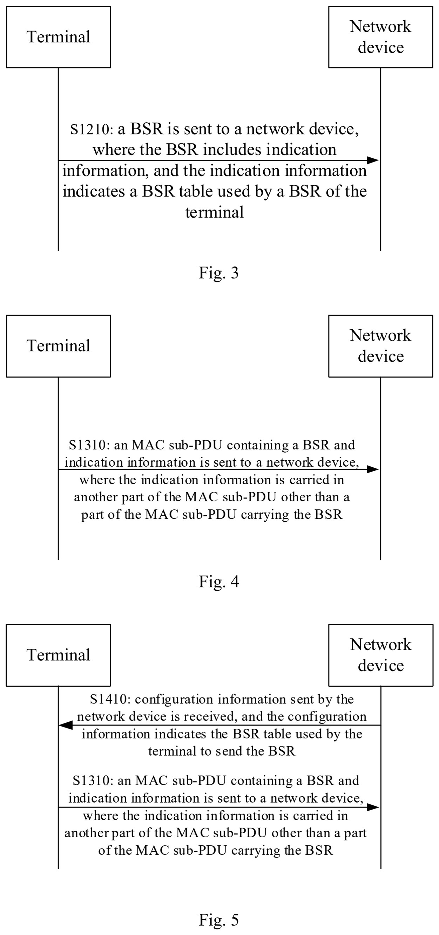

As shown in Fig. 3, an information processing method is provided by an embodiment of the present disclosure. The information processing method is performed by a terminal, and includes the following steps.

In step S1210, a BSR is sent to a network device, where the BSR includes indication information, and the indication information indicates a BSR table used by a BSR of the terminal.

In an embodiment, an information field contained in the BSR may include: a first information field, a second information field and a third information field.

The first information field indicates a logical channel group associated with a BS value carried by the BSR, where the first information field may include a bit map, and each bit in the bit map may map to one logical channel group.

The second information field is configured to carry the BS value. For example, one second information field may be used to carry the BS value of one logical channel group, then a numeric count of the second information fields may depend on a numeric count of reported logical channel groups indicated by the first information field.

The third information field carries the indication information.

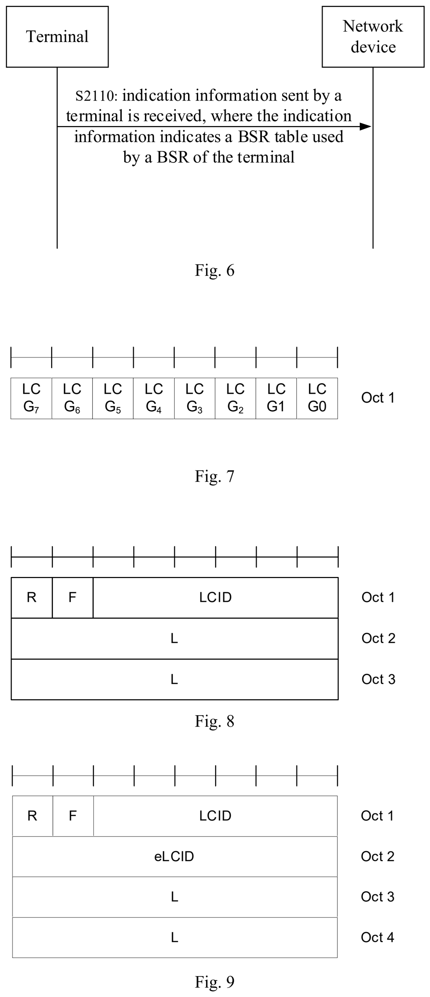

Fig. 7 is a schematic diagram of a first information domain. The first information field shown in Fig. 7 may include one octet (Oct), and the octet is denoted as Oct1. Each bit in this octet indicates one logic channel group (LCG), namely LCG7 to LCG0.

In some embodiments, an information field contained in the BSR may include a first information field and a second information field.

The first information field indicates the indication information and a logical channel group associated with a BS value carried by the BSR. For example, the indication information occupies a bit in a specific position in the first information field and indicates the BSR table referenced by the current BSR. The bit in the specific position may be the first bit and/or the last bit of the first information field.

The second information field carries the BS value.

In this way, through the simple modification of the BSR, the indication information may be carried in the BSR, and the network device may know the BSR table adopted by the current BSR while receiving the BSR.

One BSR table may carry one or more BS values, that is, one or more second information fields may be provided. For example, in a case that one second information field carries one BS value, the number of bits contained in the second information field may indicate each index in the corresponding BSR table.

One BS value may map to one logical channel or one logical channel group.

In some embodiments, the BSR is carried in a MAC sub-protocol data packet (PDU).

As shown in Fig. 4, an information processing method is provided by an embodiment of the present disclosure. The information processing method is performed by a terminal, and includes the following step.

In step S1310, an MAC sub-PDU containing a BSR and indication information is sent to a network device, where the indication information is carried in another part of the MAC sub-PDU other than a part of the MAC sub-PDU carrying the BSR.

The terminal may send a MAC PDU to the network device, and one MAC PDU may include one or more MAC sub-PDUs.

There are many types of MAC sub-PDUs as follows.

The MAC sub-PDU may include a MAC sub-header and a padding.

The MAC sub-PDU may include a MAC sub-header and a MAC service data unit (SDU).

The MAC sub-PDU may include a MAC sub-header and a MAC control element (CE).

The BSR may be carried in the padding or the MAC SDU of the MAC sub-PDU.

In some embodiments, the indication information is carried in another part of the MAC sub-PDU other than a part of the MAC sub-PDU carrying the BSR.

For example, in a case that the indication information and the BSR are carried in the same MAC sub-PDU, the network device may also receive the BSR and the indication information at the same time. However, the indication information is carried in another part of the MAC sub-PDU other than a part of the MAC sub-PDU carrying the BSR.

In some embodiments, the indication information is carried in the MAC sub-header of the MAC sub-PDU.

The BSR may be used as a body content of the MAC sub-PDU, and the indication information is carried in the MAC sub-header.

In some embodiments, an information field may be added in the MAC sub-header for carrying the indication information specifically.

In some other embodiments, there are one or more information fields in the MAC sub-header, these information fields have reserved bits or reserved code points, and the reserved bits or reserved code points may carry the indication information.

In some embodiments, the MAC sub-header includes a logical channel identifier (LCID) field, and a reserved code point of the LCID field carries the indication information.

For example, the LCID field is an information field in the MAC sub-header. The LCID field may include a plurality of bits. For example, the LCID field may include 8 bits, and the 8 bits may have 64 code points. For example, among the 64 code points, the 37th-42nd and 47th code points are reserved code points, and in the embodiment of the present disclosure, one or more of these reserved code points may be used to indicate the indication information.

In some embodiments, the MAC sub-header further includes a reserved flag bit, and the reserved flag bit carries the indication information.

The MAC sub-header further includes some reserved flag bits. For example, the "R" shown in Fig. 9 represents the reserved flag bit. The reserved flag bit may be used to carry indication information.

For example, the reserved flag bit may include one or more bits, and the bit values of these bits may be associated with different information contents of the indication information.

The MAC sub-header shown in Fig. 8 has a logical channel identifier (LCID) field.

The MAC sub-header shown in Fig. 9 has a logical channel identifier (LCID) field and an extended logical channel identifier (eLCID) field.

The LCID field and eLCID field are two kinds of LCID fields. In this way, there are two cases according to whether the MAC sub-header has the eLCID field. In a case that the MAC sub-header currently sent by the terminal has the eLCID field, the indication information may be carried in the eLCID field to be sent to the network device. In a case that the BSR currently sent by the terminal does not have the eLCID field, the indication information may be carried by the newly added third information field. Of course, in a case that the currently sent MAC sub-header does not have the eLCID field, the indication information may also be carried by the reserved flag bit (R).

A field denoted as L in Fig. 8 and Fig. 9 may be the field where the BSR is located.

In some embodiments, the BSR table includes at least one of: a type 1 BSR table; and a type 2 BSR table.

The type 1 BSR table and the type 2 BSR table are different types of BSR tables. For example, both the type 1 BSR table and the type 2 BSR table may include one or more BSR tables.

For example, the type 1 BSR table includes a first BSR table for 5-bit BS value transmission and a second BSR table for 8-bit BS value transmission. Each of Table 1 and Table 2 is a kind of the type 1 BSR table.

**Table 1**

| index | BS value | index | BS value | index | BS value | index | BS value |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

**Table 2**

| index | BS value | index | BS value | index | BS value | index | BS value |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | ≤ 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | 155 | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | ≤ 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | reserved value |

In some embodiments, buffer size (BS) values or BS value ranges corresponding to a same index in the type 2 BSR table and the type 1 BSR table are different; and/or distribution patterns of buffer size (BS) values or BS value ranges corresponding to adjacent indexes in the type 2 BSR table and the type 1 BSR table are different; and/or numeric counts of indexes in the type 2 BSR table and the type 1 BSR table are different.

For example, the BS values or the BS value ranges indicated by the same index in the type 2 BSR table and the type 1 BSR table may be the same or different.

In the embodiment of the present disclosure, the type 1 BSR table and the type 2 BSR table may be different types of BSR tables, which may meet the reporting of larger BS values, or meet the reporting of BS values with some special requirements.

In the BSR tables shown in Table 1 and Table 2, the value of the index is positively correlated to the BS value. That is, in the type 1 BSR table, the BS value changes linearly.

In some embodiments, the BS value and the value of the index in the type 2 BSR table show a positive correlation with a linear change. For example, the BS value used most frequently by the terminal is arranged at the front of the type 2 BSR table, and corresponds to the index with a smaller value in the type 2 BSR table. In this case, the change rule of the BS value in the type 2 BSR table will not change linearly with the linear increase the value of the index.

Both the type 1 BSR table and the type 2 BSR table may be allocated to the terminal by the network device, or may be predefined in the network device and the terminal by means of protocol agreement.

It may be understood that, compared with the type 1 BSR table, the BS value or the BS value range corresponding to the same index in the type 2 BSR table is smaller or larger, so that the difference between the amount of resources allocated to the terminal by the network device based on the BS value reported using the type 2 BSR table and the amount of resources required by the actual transmission of the terminal is smaller, which may make the range of the cached data amount reported by the terminal to the network device more accurate, thus effectively reducing the waste of resources.

In an embodiment, the BS values or the BS value ranges corresponding to adjacent indexes in the type 2 BSR table are linearly distributed. It may be understood that the difference between the BS values or the BS value ranges corresponding to any two adjacent indexes in the type 2 BSR table is the same. In an embodiment, the BS values or the BS value ranges corresponding to adjacent indexes in the type 2 BSR table are linearly distributed. In another embodiment, the BS values or the BS value ranges corresponding to adjacent indexes in the type 2 BSR table are exponentially distributed.

In an embodiment, the type 2 BSR table may include a plurality of type 2 BSR tables in different formats. It should be noted that the type 2 BSR table at least includes the type 2 BSR table in a first format, and the type 2 BSR table in the first format is used to describe the corresponding relationship between the 8-bit index and the BS value. It may be understood that the type 2 BSR table in the first format is suitable for a long BSR and/or a long truncated BSR. The type 2 BSR table may also include the type 2 BSR table in a second format.

The type 2 BSR table in the second format describes the corresponding relationship between the index and the BS value, which is different from the corresponding relationship between the index and the BS value described by the type 2 BSR table in the first format.

It may be understood that the accuracy of the range of the cached data amount reported using the type 1 BSR table or the type 2 BSR table may be different for the data to be transmitted with different data amounts or different service types of the terminal. In the embodiment of the present disclosure, the network device sends the first message to the terminal, so as to instruct the terminal to send the BSR according to the type 1 BSR table or the type 2 BSR table through the first message, so that the network device may directly indicate the type of the BSR table adopted by the BSR reporting of the terminal, and thus the terminal may clearly know which BSR table of the type 1 BSR table and the type 2 BSR table is adopted when sending the BSR, so as to report a more accurate range of the cached data amount to the network device, which is convenient for the network device to allocate an appropriate number of resources to the terminal, thus reducing the waste of resources caused by the inaccurate range of the cached data amount of the BSR reporting.

As shown in Fig. 5, the method further includes the following steps.

In step S1410, configuration information sent by the network device is received, and the configuration information indicates the BSR table used by the terminal to send the BSR.

In step S1420, in response to that the terminal does not use the BSR table indicated by the configuration information, the indication information is sent to the network device.

The network device configures the terminal to use a certain BSR table, but when the terminal determines that if the BSR table configured by the network device is used, there may be a big error in the reported BS value, or the reported BS value cannot cover the current actual BS value of the terminal, the terminal may select the BSR table outside the configuration of the network device to send the BSR. In order for the network device to correctly decode the BSR, the network device is informed of the BSR table currently used by the terminal through the indication information.

As shown in Fig. 6, an embodiment of the present disclosure provides an information processing method. The information processing method is performed by a network device, and includes the following step.

In step S2110, indication information sent by a terminal is received, where the indication information indicates a BSR table used by a BSR of the terminal.

The network device may include, but is not limited to, an access network device. For example, the network device may be the network device shown in Fig. 1.

In some embodiments, the indication information may include table information of the BSR table.

The table information may include, but is not limited to, at least one of:
a table number, a table name or a table index;
a type of the BSR table; and
an indicator bit of the BSR table, etc.

In conclusion, the above indication information may be any information indicating the BSR table used by the BSR generated or sent by the terminal.

In some embodiments, the indication information may be any information implicitly indicating the BSR table or explicitly indicating the BSR table.

In some embodiments, the indication information may further include effective information, and the effective information indicates a time period, times and/or a position of the terminal and/or a trigger condition of the BSR table pointed by the table information used by the terminal to send the BSR.

Of course, the above is only an example of the indication information, and the specific implementation is not limited to this example.

In some embodiments, the indication information and the BSR may be sent to the network device, respectively. For example, the terminal may send the indication information to the network device before sending the BSR, so that after the network device receives the BSR, it may determine the BSR table used by the currently received BSR according to the indication information received in advance. In some embodiments, the indication information and the BSR may be sent to the network device together, so that the network device may receive the indication information while receiving the BSR, and then decode the BSR according to the indication information, so as to accurately know the BS value currently to be sent by the terminal.

For example, the indication information is carried in the BSR.

In an embodiment, an information field contained in the BSR may include:
a first information field indicating a logical channel group associated with a BS value carried by the BSR;
a second information field used to carry the BS value; and
a third information field used to carry the indication information.

In some embodiments, an information field contained in the BSR may include a first information field and a second information field.

The first information field indicates the indication information and a logical channel group associated with a BS value carried by the BSR. For example, the indication information occupies a bit in a specific position in the first information field and indicates the BSR table referenced by the current BSR. The bit in the specific position may be the first bit and/or the last bit of the first information field.

The second information field carries the BS value.

In this way, through the simple modification of the BSR, the indication information may be carried in the BSR, and the network device may know the BSR table adopted by the current BSR while receiving the BSR.

One BSR table may carry one or more BS values, that is, one or more second information fields may be provided. For example, in a case that one second information field carries one BS value, the number of bits contained in the second information field may indicate each index in the corresponding BSR table.

One BS value may map to one logical channel or one logical channel group.

In some embodiments, the BSR is carried in a MAC sub-protocol data packet (PDU).

The terminal may send a MAC PDU to the network device, and one MAC PDU may include one or more MAC sub-PDUs.

There are many types of MAC sub-PDUs as follows.

The MAC sub-PDU may include a MAC sub-header and a padding.

The MAC sub-PDU may include a MAC sub-header and a MAC service data unit (SDU).

The MAC sub-PDU may include a MAC sub-header and a MAC control element (CE).

The BSR may be carried in the padding or the MAC SDU of the MAC sub-PDU.

In some embodiments, the indication information is carried in another part of the MAC sub-PDU other than a part of the MAC sub-PDU carrying the BSR.

For example, in a case that the indication information and the BSR are carried in the same MAC sub-PDU, the network device may also receive the BSR and the indication information at the same time. However, the indication information is carried in another part of the MAC sub-PDU other than a part of the MAC sub-PDU carrying the BSR.

In some embodiments, the indication information is carried in the MAC sub-header of the MAC sub-PDU.

The BSR may be used as a body content of the MAC sub-PDU, and the indication information is carried in the MAC sub-header.

In some embodiments, an information field may be added in the MAC sub-header for carrying the indication information specifically.

In some other embodiments, there are one or more information fields in the MAC sub-header, these information fields have reserved bits or reserved code points, and the reserved bits or reserved code points may carry the indication information.

In some embodiments, the MAC sub-header includes a logical channel identifier (LCID) field, and a reserved code point of the LCID field carries the indication information.

For example, the LCID field is an information field in the MAC sub-header. The LCID field may include a plurality of bits. For example, the LCID field may include 8 bits, and the 8 bits may have 64 code points. For example, among the 64 code points, the 37th-42nd and 47th code points are reserved code points, and in the embodiment of the present disclosure, one or more of these reserved code points may be used to indicate the indication information.

In some embodiments, the MAC sub-header further includes a reserved flag bit, and the reserved flag bit carries the indication information.

The MAC sub-header further includes some reserved flag bits. For example, the "R" shown in Fig. 9 represents the reserved flag bit. The reserved flag bit may be used to carry indication information.

For example, the reserved flag bit may include one or more bits, and the bit values of these bits may be associated with different information contents of the indication information.

In some embodiments, the BSR table includes at least one of: a type 1 BSR table; and a type 2 BSR table.

In some embodiments, buffer size (BS) values or BS value ranges corresponding to a same index in the type 2 BSR table and the type 1 BSR table are different; and/or distribution patterns of buffer size (BS) values or BS value ranges corresponding to adjacent indexes in the type 2 BSR table and the type 1 BSR table are different; and/or numeric counts of indexes in the type 2 BSR table and the type 1 BSR table are different.

For example, the BS values or the BS value ranges indicated by the same index in the type 2 BSR table and the type 1 BSR table may be the same or different.

In the embodiment of the present disclosure, the type 1 BSR table and the type 2 BSR table may be different types of BSR tables, which may meet the reporting of larger BS values, or meet the reporting of BS values with some special requirements.

In the BSR tables shown in table 1 and table 2, the value of the index is positively correlated to the BS value. That is, in the type 1 BSR table, the BS value changes linearly.

In some embodiments, the BS value and the value of the index in the type 2 BSR table show a positive correlation with a linear change. For example, the BS value used most frequently by the terminal is arranged at the front of the type 2 BSR table, and corresponds to the index with a smaller value in the type 2 BSR table. In this case, the change rule of the BS value in the type 2 BSR table will not change linearly with the linear increase the value of the index.

Both the type 1 BSR table and the type 2 BSR table may be allocated to the terminal by the network device, or may be predefined in the network device and the terminal by means of protocol agreement.

It may be understood that, compared with the type 1 BSR table, the BS value or the BS value range corresponding to the same index in the type 2 BSR table is smaller or larger, so that the difference between the amount of resources allocated to the terminal by the network device based on the BS value reported using the type 2 BSR table and the amount of resources required by the actual transmission of the terminal is smaller, which may make the range of the cached data amount reported by the terminal to the network device more accurate, thus effectively reducing the waste of resources.

In an embodiment, the BS values or the BS value ranges corresponding to adjacent indexes in the type 2 BSR table are linearly distributed. It may be understood that the difference between the BS values or the BS value ranges corresponding to any two adjacent indexes in the type 2 BSR table is the same. In an embodiment, the BS values or the BS value ranges corresponding to adjacent indexes in the type 2 BSR table are linearly distributed. In another embodiment, the BS values or the BS value ranges corresponding to adjacent indexes in the type 2 BSR table are exponentially distributed.

In an embodiment, the type 2 BSR table may include a plurality of type 2 BSR tables in different formats. It should be noted that the type 2 BSR table at least includes the type 2 BSR table in a first format, and the type 2 BSR table in the first format is used to describe the corresponding relationship between the 8-bit index and the BS value. It may be understood that the type 2 BSR table in the first format is suitable for a long BSR and/or a long truncated BSR. The type 2 BSR table may also include the type 2 BSR table in a second format.

The type 2 BSR table in the second format describes the corresponding relationship between the index and the BS value, which is different from the corresponding relationship between the index and the BS value described by the type 2 BSR table in the first format.

It may be understood that the accuracy of the range of the cached data amount reported using the type 1 BSR table or the type 2 BSR table may be different for the data to be transmitted with different data amounts or different service types of the terminal. In the embodiment of the present disclosure, the network device sends the first message to the terminal, so as to instruct the terminal to send the BSR according to the type 1 BSR table or the type 2 BSR table through the first message, so that the network device may directly indicate the type of the BSR table adopted by the BSR reporting of the terminal, and thus the terminal may clearly know which BSR table of the type 1 BSR table and the type 2 BSR table is adopted when sending the BSR, so as to report a more accurate range of the cached data amount to the network device, which is convenient for the network device to allocate an appropriate number of resources to the terminal, thus reducing the waste of resources caused by the inaccurate range of the cached data amount of the BSR reporting.

In an embodiment, the terminal informs the network device to report the BSR using the type 2 BSR table.

There are many ways for the terminal to inform the network device of the BSR table used by the BSR, which include, but are not limited to, at least one of the following ways.

Way 1: the terminal implicitly indicates whether the type 1 BSR table or the type 2 BSR table is used for the BSR reporting.

For example, in a case that BS values of multiple LCGs are reported, these LCGs use the same BSR table, and it is impossible to distinguish each LCG.

In an embodiment, in this case, code points will be left from a reserved LCID field to indicate that the terminal is using a new BSR table. The new BSR table may be the type 2 BSR table mentioned above.

In an embodiment, a reserved field in the MAC sub-header of the MAC sub-PDU corresponding to the BSR is used to indicate whether the new BSR table or the old BSR table is used for reporting. The old BSR table here may be the type 1 BSR table mentioned above.

The above two embodiments may be used in combination.

For example, the BSR may have many types as follows: an extended short BSR; an extended short truncated BSR; an extended long BSR; an extended long truncated BSR; and an extended pre-emptive BSR.

The MAC sub-header uses a logical channel identifier (LCID) field and an extended logical channel identifier (eLCID) field to indicate the carried data, such as a type of an MAC CE or data of a certain logical channel.

In a case that the extended logical channel identifier (eLCID) field is used in the MAC sub-header of the MAC sub-PDU carrying an MAC control element, the MAC sub-header of the MAC sub-PDU of this type has more reserved code points because the eLCID field is used for indicating, so that the reserved code points may be used to carry the indication information to indicate a new MAC CE. In the relevant protocols, the value 319 of the eLCID field indicates that this is an extended pre-emptive BSR reported using the type 1 BSR table. In an embodiment, one reserved eLCID code point, such as the code point 291 in the eLCID field, is used to indicate that this is an extended pre-emptive BSR reported using the type 2 BSR table, which is different from the extended pre-emptive BSR reported using the type 1 BSR table. In this way, the same type of BSR reporting with different BSR tables may be distinguished.

For example, for the following types of BSRs: the extended short BSR, the extended truncated short BSR; the extended long BSR, the extended truncated long BSR, and the extended pre-emptive BSR, since there are enough reserved code points in the eLCID field used in the MAC sub-header of the MAC sub-PDU carrying the BSR MAC control element, for this type of BSR reporting, the reserved code point may be used to report the indication information for indication of this type of BSR. During the reporting, the BSR is reported using the type 2 BSR table, which is different from the BSR reported using the type 1 BSR table. In this way, the same type of BSR reporting with different BSR tables may be distinguished.

In a case that the logical channel identifier (LCID) field is used in the MAC sub-header, the LCID field does not have enough reserved code points, and the MAC sub-header may be used to carry the indication information to further indicate which BSR table is used to report the BSR.

Therefore, for the long BSR, the long truncated BSR, and the pre-emptive BSR MAC CE, since there are limited reserved code points in the LCID field used in the MAC sub-header of the MAC sub-PDU carrying the MAC control element, the indication information carried by the MAC sub-header may be used to distinguishably indicate which BSR table is used to report the BSR. In this way, the same type of BSR reporting with different BSR tables may be distinguished.

In an embodiment, for the long BSR, since the LCID field used in the MAC sub-header of the MAC sub-PDU carrying the long BSR for transmission is equal to 62, the MAC sub-header may be further used to carry the indication information to indicate which BSR table is used to report the BSR. For example, the reserved bit R in the MAC sub-header being equal to 0 means that this is a long BSR reported using the type 1 BSR table, while the reserved bit R in the MAC sub-header being equal to 1 means that this is a long BSR reported using the type 2 BSR table.

In this way, the reserved code points in the LCID field may be saved.

In an embodiment, for the way that the terminal implicitly indicates whether the type 1 BSR table or the type 2 BSR table is used for the BSR reporting, it may be agreed by protocols that all LCGs in the BSR reporting use the same type of BSR table, such as the type 1 BSR table or the type 2 BSR table. Otherwise, the buffer reporting of the LCG with different types of BSR tables cannot be multiplexed in the same BSR MAC CE reporting.

Way 2, the terminal explicitly indicates whether the type 1 BSR table or the type 2 BSR table is used for the BSR reporting.

In this case, BSRs of different logical channel groups may use the same BSR table or different BSR tables.

When the terminal reports the BSR, the following information is carried: an LCGID; a buffer size; and table information of the BSR table used, where the table information may be a table index.

In some embodiments, in a case that the BSR carries the table information, the BSR table used by the BSR may be determined according to the table information.

In some other embodiments, in a case that the BSR does not carry the table information, it is considered that the BSR uses the type 1 BSR table and/or the BSR table indicated by the configuration information of the network device.

Specifically, in a case that the BSR carries the table information, it may indicate a specific table index or a table indication value.

The table indication value may correspond to one or more bits.

Assuming that the table indication value may be a value of 0, it indicates BSR table 1; or, assuming that the table indication value may be a value of 1, it indicates BSR table 2.

The table index used may be an LCG granularity or a quality of service (QoS) flow granularity or a data radio bearer (DRB) granularity.

In some embodiments, multiple LCGs may share the same BSR table.

In an embodiment, for the way that the terminal explicitly indicates whether the type 1 BSR table or the type 2 BSR table is used for the BSR reporting, the buffer size value reporting of the LCG with different types of BSR tables may be multiplexed in the same BSR MAC CE reporting, where it is indicated which type of BSR table is used for the buffer size value reporting of a target LCG.

An embodiment of the present disclosure also provides a communication system, including a terminal and a network device.

The terminal is used for the information processing method provided by any technical scheme of the first aspect, for example, performing any of the aforementioned information processing methods performed by the terminal.

The network device is used for the information processing method provided by any technical scheme of the second aspect, for example, performing any of the aforementioned information processing methods performed by the network device.

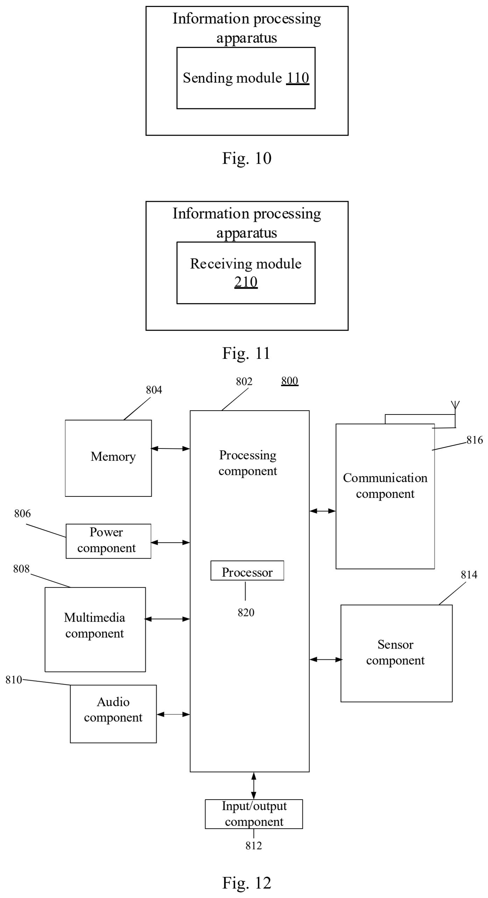

As shown in Fig. 10, an embodiment of the present disclosure provides an information processing apparatus, and the information processing apparatus includes a sending module 110.

The sending module 110 is configured to send indication information to a network device, where the indication information indicates a BSR table used by a BSR of a terminal.

The information processing apparatus may be the terminal.

In some embodiments, the terminal may further include a processing module connected with the sending module 110 and configured to send the indication information.

In some other embodiments, the terminal may further include a storage module connected with the sending module 110 and configured to store the indication information.

It may be understood that the indication information is carried in the BSR.

It may be understood that the BSR is carried in the MAC sub-protocol data packet (PDU).

It may be understood that the indication information is carried in another part of the MAC sub-PDU other than a part of the MAC sub-PDU carrying the BSR.

It may be understood that the indication information is carried in an MAC sub-header of the MAC sub-PDU.

It may be understood that the MAC sub-header includes: a logical channel identifier (LCID) field, where a reserved code point of the LCID field carries the indication information.

It may be understood that the MAC sub-header further includes a reserved flag bit, and the reserved flag bit carries the indication information.

It may be understood that the BSR table includes at least one of: a type 1 BSR table; and a type 2 BSR table.

It may be understood that buffer size (BS) values or BS value ranges corresponding to a same index in the type 2 BSR table and the type 1 BSR table are different; and/or, distribution patterns of buffer size (BS) values or BS value ranges corresponding to adjacent indexes in the type 2 BSR table and the type 1 BSR table are different; and/or, numeric counts of indexes in the type 2 BSR table and the type 1 BSR table are different.

As shown in Fig. 11, an embodiment of the present disclosure provides an information processing apparatus, and the information processing apparatus includes a receiving module 210.

The receiving module 210 is configured to receive indication information sent by a terminal, where the indication information indicates a BSR table used by a BSR of the terminal.

In some embodiments, the information processing apparatus may include a processing module configured to process the indication information.

In some other embodiments, the information processing apparatus may include a storage module connected with the receiving module 210 and configured to store the indication information.

It may be understood that the receiving module 210 is configured to receive the BSR containing the indication information.

It may be understood that the receiving module 210 is configured to receive a media access control (MAC) sub-protocol data unit (PDU) containing the indication information and the BSR, where the indication information is carried in another part of the MAC sub-PDU other than a part of the MAC sub-PDU carrying the BSR.

It may be understood that the BSR is carried in the MAC sub-protocol data packet (PDU), and the indication information is carried in an MAC sub-header of the MAC sub-PDU.

It may be understood that the MAC sub-header includes: a logical channel identifier (LCID) field, where a reserved code point of the LCID field carries the indication information.

It may be understood that the MAC sub-header further includes a reserved flag bit, and the reserved flag bit carries the indication information.

It may be understood that the BSR table includes at least one of: a type 1 BSR table; and a type 2 BSR table.

It may be understood that buffer size (BS) values or BS value ranges corresponding to a same index in the type 2 BSR table and the type 1 BSR table are different; and/or, distribution patterns of buffer size (BS) values or BS value ranges corresponding to adjacent indexes in the type 2 BSR table and the type 1 BSR table are different; and/or, numeric counts of indexes in the type 2 BSR table and the type 1 BSR table are different.

An embodiment of the present disclosure provides a communication device, including a memory and a processor.

The memory is configured to store instructions executable by the processor.

The processor is connected with the memory.

The processor is configured to perform the information processing method provided by any of the aforementioned technical schemes.

The processor may include various types of storage media, which are non-transitory computer storage media, and may continue to remember the information stored thereon after power failure of the communication device.

Here, the communication device includes a UE or a network element, and the network element may be any one of the above first to fourth network elements.

The processor may be connected to the memory through a bus or the like, for reading the executable program stored on the memory, so as to perform the corresponding method, for example, at least one of the methods shown in Figs. 2 to 6.

Fig. 12 is a block diagram of a UE 800 according to an illustrative embodiment. For example, the UE 800 may be a mobile phone, a computer, a digital broadcast user equipment, a messaging device, a game console, a tablet device, a medical device, a fitness device, a personal digital assistant, and the like.

Referring to Fig. 12, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the UE 800, such as operations associated with display, telephone call, data communication, camera operation and recording operation. The processing component 802 may include one or more processors 820 to execute instructions to generate all or part of the steps of the methods described above. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the UE 800. Examples of these data include instructions for any application or method operating on the UE 800, contact data, phone book data, messages, pictures, videos, and the like. The memory 804 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the UE 800. The power component 806 may include a power management system, one or more power supplies, and other components associated with generating, managing and distributing power for the UE 800.

The multimedia component 808 includes a screen that provides an output interface between the UE 800 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 808 includes a front camera and/or a rear camera. When the UE 800 is in an operation mode, such as a shooting mode or a video mode, the front camera and/or the rear camera may receive external multimedia data. Each front camera and rear camera may be a fixed optical lens system or have a focal length and an optical zoom capability.

The audio component 810 is configured to output and/or input audio signals. For example, the audio component 810 includes a microphone (MIC), which is configured to receive external audio signals when the UE 800 is in an operation mode, such as a call mode, a recording mode and a voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, which may be keyboards, click wheels, buttons, etc. These buttons may include, but are not limited to, a home button, a volume button, a start button and a lock button.

The sensor component 814 includes one or more sensors for providing various aspects of state evaluation for the UE 800. For example, the sensor component 814 may detect the on/off state of the UE 800, the relative positioning of components, such as the display and keypad of the UE 800, the position change of the UE 800 or a component of the UE 800, the presence or absence of contact between the user and the UE 800, the orientation or acceleration/deceleration of the UE 800 and the temperature change of the UE 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may further include an acceleration sensor, a gyro sensor, a magnetic sensor, a pressure sensor or a temperature sensor.

The communication component 816 is configured to facilitate wired or wireless communication between the UE 800 and other devices. The UE 800 may access wireless networks based on communication standards, such as Wi-Fi, 2G or 3G, or their combination. In an illustrative embodiment, the communication component 816 receives a broadcast signal or broadcast related information from an external broadcast management system via a broadcast channel. In an illustrative embodiment, the communication component 816 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the above methods.

In an illustrative embodiment, there is also provided a non-transitory computer-readable storage medium including instructions, such as the memory 804 including instructions, which are executable by the processor 820 of the UE 800 to generate the above methods. For example, the non-transitory computer-readable storage medium may be a ROM, a random access memory (RAM), a CD-ROM, a magnetic tape, a floppy disk, an optical data storage device, etc.

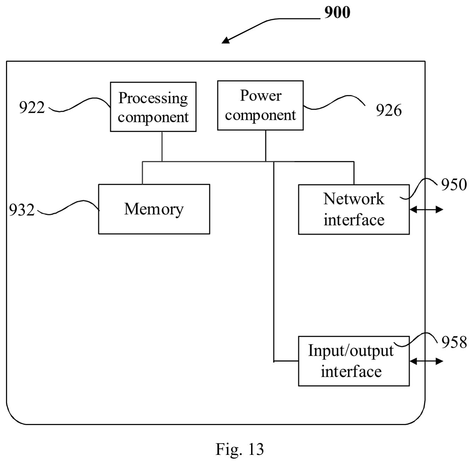

As shown in Fig. 13, an embodiment of the present disclosure provides an access network device. For example, a communication device 900 may be provided as a network-side device. The communication device may include various network elements such as the aforementioned access network element and/or network function.

Referring to Fig. 13, the communication device 900 includes a processing component 922, which further includes one or more processors, and memory resources represented by a memory 932 for storing instructions, such as application programs, executable by the processing component 922. The application program stored in the memory 932 may include one or more modules each corresponding to a set of instructions. In addition, the processing component 922 is configured to execute instructions to perform any of the aforementioned methods applied to the access network device, for example, the method shown in any one of Figs. 2 to 6.

The communication device 900 may further include a power component 926 configured to perform power management of the communication device 900, a wired or wireless network interface 950 configured to connect the communication device 900 to a network, and an input-output (I/O) interface 958. The communication device 900 may operate based on an operating system stored in the memory 932, such as Windows Server^{®}, Mac OS X^{®}, Unix^{®}, Linux^{®}, FreeBSD^{®}, or the like.

In the case of no contradiction, each step in a certain implementation or embodiment may be implemented as an independent embodiment, and the steps may be arbitrarily combined. For example, the scheme after removing some steps in a certain implementation or embodiment may also be implemented as an independent embodiment, and the order of respective steps in a certain implementation or embodiment may be arbitrarily exchanged. In addition, optional ways or alternatives in a certain implementation or embodiment may be arbitrarily combined. In addition, various implementations or embodiments may be arbitrarily combined, for example, some or all steps of different implementations or embodiments may be arbitrarily combined, and a certain implementation or embodiment may be arbitrarily combined with optional ways or alternatives of other implementations or embodiments.

Those skilled in the art will easily think of other implementations of the embodiments of the present disclosure after considering the specification and practicing the invention disclosed herein. The present disclosure is intended to cover any variations, uses or adaptations of the embodiments of the present disclosure, which follow the general principles of the embodiments of the present disclosure and include common sense or common technical means in the related art that are not disclosed in the present disclosure. The specification and examples are to be regarded as illustrative only, with the true scope and spirit of the embodiments of the present disclosure being indicated by the following claims.

It should be understood that the embodiments of the present disclosure are not limited to the precise structures that have been described above and shown in the accompanying drawings, and various modifications and changes may be made without departing from the scope of the present disclosure. The scope of the embodiments of the present disclosure is limited only by the append claims.

## Claims

1. An information processing method, performed by a terminal, and comprising:
sending indication information to a network device, wherein the indication information indicates a buffer status report (BSR) table used by a BSR of the terminal.

2. The method according to claim 1, wherein the indication information is carried in the BSR.

3. The method according to claim 1, wherein the indication information is carried in a medium access control (MAC) sub-header of a MAC sub-protocol data unit (PDU).

4. The method according to claim 3, wherein the MAC sub-header comprises a logical channel identifier (LCID) field, wherein a reserved code point of the LCID field carries the indication information.

5. The method according to claim 3, wherein the MAC sub-header further comprises a reserved flag bit, and the reserved flag bit carries the indication information.

6. The method according to any one of claims 1 to 5, wherein the BSR table comprises at least one of:
a type 1 BSR table; and
a type 2 BSR table.

7. The method according to claim 6, wherein,
buffer size (BS) values or BS value ranges corresponding to a same index in the type 2 BSR table and the type 1 BSR table are different; and/or
distribution patterns of buffer size (BS) values or BS value ranges corresponding to adjacent indexes in the type 2 BSR table and the type 1 BSR table are different; and/or
numeric counts of indexes in the type 2 BSR table and the type 1 BSR table are different.

8. An information processing method, performed by a network device, and comprising:
receiving indication information sent by a terminal, wherein the indication information indicates a buffer status report (BSR) table used by a BSR of the terminal.

9. The method according to claim 8, further comprising:
receiving the BSR containing the indication information.

10. The method according to claim 9, further comprising:
receiving a media access control (MAC) sub-protocol data unit (PDU) containing the indication information and the BSR.

11. The method according to claim 10, wherein the BSR is carried in the MAC sub-PDU, wherein the indication information is carried in a MAC sub-header of the MAC sub-PDU.

12. The method according to claim 11, wherein the MAC sub-header comprises a logical channel identifier (LCID) field, wherein a reserved code point of the LCID field carries the indication information.

13. The method according to claim 11, wherein the MAC sub-header further comprises a reserved flag bit, and the reserved flag bit carries the indication information.

14. The method according to any one of claims 8 to 13, wherein the BSR table comprises at least one of:
a type 1 BSR table; and
a type 2 BSR table.

15. The method according to claim 14, wherein,
buffer size (BS) values or BS value ranges corresponding to a same index in the type 2 BSR table and the type 1 BSR table are different; and/or
distribution patterns of buffer size (BS) values or BS value ranges corresponding to adjacent indexes in the type 2 BSR table and the type 1 BSR table are different; and/or
numeric counts of indexes in the type 2 BSR table and the type 1 BSR table are different.

16. An information processing apparatus, comprising:
a sending module configured to send indication information to a network device, wherein the indication information indicates a buffer status report (BSR) table used by a BSR of a terminal.

17. An information processing apparatus, comprising:
a receiving module configured to receive indication information sent by a terminal, wherein the indication information indicates a buffer status report (BSR) table used by a BSR of the terminal.

18. A communication device, comprising a processor, a transceiver, a memory and an executable program stored in the memory and configured to be executed by the processor, wherein the processor is configured to perform the information processing method according to any one of claims 1 to 7 or any one of claims 8 to 16 when executing the executable program.

19. A computer storage medium, for storing an executable program, which, when executed by a processor, is configured to cause the processor to perform the information processing method according to any one of claims 1 to 7 or any one of claims 8 to 16.

20. A communication system, comprising:
a terminal configured to perform the information processing method according to any one of claims 1 to 7; and
a network device configured to perform the information processing method according to any one of claims 8 to 15.
